# EUROPÄISCHE PATENTSCHRIFT

(11) **EP 3 053 445 B1**
(45) Veröffentlichungstag und Bekanntmachung des Hinweises auf die Patenterteilung: **30.05.2018**
(21) Anmeldenummer: 15152760.3
(22) Anmeldetag: 27.01.2015
(51) Int. Cl.: A23C 9/133, A23C 9/15, A23C 19/076, A23C 19/09, A23L 19/00, A23L 21/10, A23P 20/20, A23P 30/20, A23P 30/25, B65B 3/26, B65D 77/08

(54) **Lebensmittelzubereitung (I)**
Food composition (I)
Composition alimentaire (I)

(43) Veröffentlichungstag der Anmeldung: 10.08.2016
(73) Patentinhaber: DMK Deutsches Milchkontor GmbH, 27404 Zeven (DE)
(72) Erfinder: Schomacker, Marina, 27419 Sittensen (DE); Hahn, Michael, 27404 Heerlingen (DE)
(74) Vertreter: Fabry, Bernd

(56) Entgegenhaltungen:
- EP-B1- 1 348 340
- DE-A1- 19 962 780
- DE-U1- 20 314 432
- US-A1- 2006 292 265

## Beschreibung

### GEBIET DER ERFINDUNG

Die Erfindung befindet sich auf dem Gebiet der Milchprodukte und betrifft eine streichfähige Lebensmittelzubereitung auf Basis von Frischkäse und Früchten.

### STAND DER TECHNIK

Frischkäse und Fruchtzubereitungen, speziell Speisequark und Marmelade stellen speziell in den Ländern der Europäischen Union die bei weitem beliebtesten Brotaufstriche dar. Besonders gerne werden die Produkte zusammen verwendet, wobei in der Regel zunächst der Frischkäse aufgestrichen und darauf dann die Fruchtzubereitung gegeben wird. Dazu bedarf es bislang zwei verschiedener Produkte, die einzeln aufgestrichen werden, wobei für jede der Produkte dann auch wieder eine Dosierhilfe, also ein Messer oder ein Löffel benötigt werden, damit die einzelnen Produkte nicht verunreinigt werden.

Im heutigen Zeitalter der so genannten "Convenience Produkte" gehört es zu den typischen Verbraucherbedürfnissen, auch im Nahrungsmittelsektor alles einfacher zu gestalten. Wozu zwei Produkte einkaufen, wenn man sie doch zusammen verwenden will? Im vorliegenden Fall hat es hierzu bislang zwei Ansätze gegeben, nämlich zum einen ein Produkt, bei dem die beiden Komponenten räumlich getrennt vorliegen und zum anderen ein Mischprodukt aus Frischkäse und Fruchtzubereitung. Die "2-in-1" Produkte haben sich bis heute im Markt nicht durchgesetzt, weil es doch letztlich kein Fortschritt darstellt, wenn beide Komponenten nacheinander auf das Brot aufgetragen werden müssen. Das Mischprodukt erfüllt weder die ästhetischen noch geschmacklichen Anforderungen des Marktes.

Aus der EP 1348340 B1 (NESTLE) ist eine Milchproduktzubereitung bekannt, die ebenfalls eine Fruchtbasis als zweite Komponente enthalten kann. Die Produkte werden durch Co-Extrusion hergestellt, wobei die Komponenten dann jeweils in einzelnen Sektoren angeordnet sind, die nicht miteinander in Kontakt stehen. Auf diese Weise kann dann nur wieder entweder die eine oder die andere Komponente aufgestrichen werden.

Das Dokument US 2006/292265 A1 betrifft ein aus fermentierter Milch zusammengesetztes Produkt in einer Verpackung in Form eines Bechers, das zwei aneinander angrenzenden Massen an fermentiertem Milchprodukt von kontrastierenden Farben aufweist, die nebeneinander angeordnet sind.

Das Dokument DE 199 62 780 A1 betrifft eine Frischkäsezubereitung, bestehend aus in einem Gebinde abgefülltem Frischkäse. Der Frischkäse umschließt ein Volumen eines anderen Lebensmittels und wahlweise ist zusätzlich ein weiterer Volumenanteil dieses anderen Lebensmittels auf der Oberfläche des Frischkäses aufgebracht. Das andere Lebensmittel kann aus einer Monofruchtzubereitung oder aus einer Zubereitung einer Fruchtmischung bestehen.

Das Dokument DE 203 14 432 U1 betrifft betrifft einen stabilen zwei- oder mehrphasigen Brotaufstrich mit mindestens einer Phase (I) eines wasserkontinuierlichen Brotaufstrichs auf Milchproduktbasis und mindestens einer davon abweichenden wasserkontinuierlichen Phase (II), die gegebenenfalls geschmacksgebende, färbende und/oder andere Zusatzstoffe enthält, wobei zwischen den Phasen die molare Konzentration bzw. die Stoffmengenkonzentration der darin vorliegenden osmotisch wirksamen Stoffe angeglichen ist. Es wird bevorzugt, dass die Phase (II) wässrige Zubereitungen von Früchten und/oder Gemüse, insbesondere in Form süßer und/oder herzhafter Zubereitungen enthält. Insbesondere werden als osmotisch wirksame Substanzen Zucker und/oder Salze herangezogen, z.B. Saccharose, Glucose, Fructose, Invertzucker, Lactose, Maltose, Zuckersirup, Natriumchlorid, Kaliumchlorid, Calciumchlorid, Calciumphosphate, Magnesiumcitrat, Calciumcitrat und weitere Milchsalze.

Die Aufgabe der vorliegenden Erfindung hat daher darin bestanden, eine streichfähige Zubereitung, die sowohl Frischkäse als auch eine Fruchtmasse enthält, zur Verfügung zu stellen, bei denen die beiden Komponenten gemeinsam aus einem Container bzw. Behältnis entnommen und als Brotaufstrich eingesetzt werden können, wobei keine Durchmischung im Behälter stattfindet, so dass beide Komponenten auch als separate Bestandteile wahrgenommen werden.

Eine weitere Aufgabe hat darin bestanden, die Komponenten vorzugsweise so auszuwählen, dass sie sich gegenseitig hinsichtlich ihrer sensorischen Eigenschaften nicht beeinträchtigen. Dazu gehört insbesondere eine Veränderung der Konsistenz der Frischkäsekomponente durch Reaktion mit Fruchtsäuren und die Veränderung des Geschmacks durch Durchdringen des Produktes mit arttypischem Fruchtgeschmack, die aus den Fruchtzubereitungen austreten können.

### BESCHREIBUNG DER ERFINDUNG

Gegenstand der Erfindung ist eine streichfähige Lebensmittelzubereitung, enthaltend
(a) eine Frischkäsekomponente, die dadurch erhältlich ist, dass man
   (a1) Rohmilch einer Temperaturbehandlung unterwirft und den Rahm abtrennt, so dass eine ungesäuerte Quarkgrundmasse entsteht,
   (a2) die so erhaltene Mischung einer Temperaturbehandlung unterwirft, bis Denaturierung eintritt,
   (a3) das denaturierte Produkt mit Starterkulturen und Lab versetzt und gegebenenfalls
   (a4) die nach Abschluss der Fermentation erhaltene Quarkgrundmasse auf einen definierten Trockenmassen- und Proteingehalt einstellt,
   und als Starterkultur
   (i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
   (ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
   einsetzt,
   und
(b) eine Fruchtzubereitung,
wobei die Komponenten (a) und (b) in einem Container dergestalt nebeneinander vorliegen, dass sie in den drei Raumrichtungen zusammenhängende Volumina einnehmen, die sich nicht vermischen.

Überraschenderweise wurde gefunden dass die erfindungsgemäße Aufgabe voll umfänglich gelöst wird, wenn man dafür sorgt, dass die beiden Komponenten in solcher Weise in die Container bzw. Behältnisse abgefüllt werden, dass sie zusammenhängende Volumina bilden, d.h. als separate Komponenten nebeneinander vorliegen.

Die Komponenten (a) und (b) können dadurch in den drei Raumrichtungen jeweils zusammenhängende Volumina bilden, indem sie im Container
- geschichtet vorliegen;
- ein Strudelmuster bilden, oder
- als jeweils separate Stränge vorliegen.
Als besonders vorteilhaft hat es sich erweisen, wenn die Komponenten entweder ein Strudelmuster bilden oder als separate Stränge vorliegen. Unter einem Strudelmuster ist zu verstehen, dass die Komponenten ein spiralförmiges Muster aufspannen, das sich in der Ebene und in der Tiefe des Behälters fortsetzt, ohne unterbrochen zu werden. Das Strangmuster entspricht dem, welches man von anderen Lebensmitteln kennt, die in Tuben abgepackt werden und die ebenfalls zwei Komponenten mit unterschiedlichen Farben oder Geschmacksrichtungen enthalten.

Demzufolge umfasst die vorliegende Erfindung auch eine streichfähige Lebensmittelzubereitung, enthaltend
(a) eine Frischkäsekomponente, die dadurch erhältlich ist, dass man
   (a1) Rohmilch einer Temperaturbehandlung unterwirft und den Rahm abtrennt, so dass eine ungesäuerte Quarkgrundmasse entsteht,
   (a2) die so erhaltene Mischung einer Temperaturbehandlung unterwirft, bis Denaturierung eintritt,
   (a3) das denaturierte Produkt mit Starterkulturen und Lab versetzt und gegebenenfalls
   (a4) die nach Abschluss der Fermentation erhaltene Quarkgrundmasse auf einen definierten Trockenmassen- und Proteingehalt einstellt,
   und als Starterkultur
   (i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
   (ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
   einsetzt,
   und
(b) eine Fruchtzubereitung,
die dadurch erhalten wird, dass man die beiden Komponenten mit Hilfe geeigneter und im Folgenden näher beschriebener Verfahren in ein Behältnis abfüllt, dass sie entweder ein Strudelmuster bilden oder als jeweils separate Stränge vorliegen.

### CONTAINER

Unter einem Container ist im Sinne der Erfindung jedes Behältnis zu verstehen, das von seiner Form und seinem Material geeignet ist, Lebensmittel, speziell cremige Produkte, wie sie die erfindungsgemäßen Zubereitungen darstellen, aufzunehmen, um sie an den Endverbraucher abgeben zu können. In der Regel stellen die Container - obschon dies für die Erfindung nicht kritisch ist - Schalen oder Töpfe mit einem Fassungsvermögen zwischen 50 und 500 ml, vorzugsweise zwischen 100 und 250 ml dar, die nach der Befüllung mit einer Folie vs. Platine sowie gegebenenfalls einen Deckel verschlossen werden und dann in Trays vs. Paletten abgepackt an den Handel abgegeben werden. Die Behältnisse können blickdicht sein, vorzugsweise sind sie jedoch transparent, damit der Verbraucher das attraktive Muster - sei es die Schichtung, den Strudel oder die Stränge - erkennen kann.

### FRISCHKÄSE

Unter der Bezeichnung Frischkäse versteht der Fachmann aus pasteurisierter Milch hergestellte Käsesorten, die, im Gegensatz zu vielen anderen Käsearten, nicht oder nur sehr wenig reifen müssen und sofort zum Verzehr bereit sind. In Deutschland müssen sie gemäß Käseverordnung einen Wassergehalt in der fettfreien Käsemasse von über 73 Prozent aufweisen. Deswegen ist Frischkäse auch nur kurz haltbar und muss möglichst gekühlt gelagert werden. Für die Bereitung von Frischkäse ist, im Gegensatz zu anderen Käsesorten, weniger Lab, eine geringere Denaturierungstemperatur und eine längere Denaturierungszeit erforderlich. Frischkäse ist in allen Fettstufen erhältlich. Zu den Frischkäsesorten gehören zum Beispiel Brimsen, Brousse du Rove, Burrata, Hüttenkäse (auch als körniger Frischkäse, *cottage cheese* bekannt, der aus Magermilch hergestellt aber teils mit Sahne verfeinert wird),Mascarpone, Panir, Quark, Rahm-, Doppelrahm- oder Dreifachrahmkäse, Ricotta und Schichtkäse sowie Ziger.

Vorzugsweise enthalten die erfindungsgemäßen Zubereitungen als Komponente (a) Speisequark. Zur Herstellung von Quark wird in der Regel entrahmte Milch einer Temperaturbehandlung unterworfen und die enthaltenen Proteine denaturiert. Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch wurde die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Vorzugsweise weisen solche Quarkgrundmassen bei 20 °C eine Viskosität nach Brookfield (RVT, Spindel 1, 10 Upm) im Bereich von etwa 1.000 bis etwa 8.000 mPas, vorzugsweise etwa 2.000 bis etwa 6.00 mPas und insbesondere etwa 3.000 bis etwa 5.000 mPas auf.

Der Vorteil, der mit der Verwendung solcher Quarkgrundmassen verbunden ist, liegt darin, dass unter Verwendung der ausgewählten Starterkulturen ein geschmacklich signifikant verbesserter Quark erhalten wird, der cremig schmeckt und keinen schleimigen Gesamteindruck hinterlässt. Die Masse besitzt zudem eine Konsistenz, die Molkenaustritt nach dem Entnehmen aus dem Container/Behältnis zwar nicht völlig verhindert, jedoch erheblich verzögert. Durch diese Erfindung behält das Finalprodukt seine appetitliche Optik auch nach wiederholter Produktentnahme bei.

Diese vorteilhafte Konsistenz lässt sich noch weiter verbessern, wenn man die Quarkmassen einer Nachbehandlung unterwirft, indem man eine definierte Menge an Scherenergie über mindestens einen Rotor-Stator Mischer einträgt; dieses Verfahren wird auch als "stretching" bezeichnet. Dabei kommen je nach Bedarf ein- bis dreistufige Systeme zum Einsatz. Durch Variation von Schlitzbreite, Anzahl und Geometrie der Zahnreihen, Anzahl der Rotor-Stator-Sätze, Verweilzeit und Drehzahl kann die jeweils gewünschte Viskosität und Cremigkeit eingestellt werden, wobei die Justierung dieser Parameter vom Fachmann auf der Grundlage seines allgemeinen Wissens vorgenommen werden kann, ohne dazu erfinderisch tätig werden zu müssen. Entsprechende Bauteile sind beispielsweise unter der Bezeichnung "Ytron-Z" (Ytron-Mischer) von der Ytron Process Technology GmbH im Handel erhältlich.

Die nach der Fermentation und gegebenenfalls nach dem Stretching erhaltene Frischkäsegrundmasse wird anschließend beispielsweise durch Zugabe von Sahne auf den gewünschten Gehalt an Trockenmasse, Proteinen und Fett eingestellt. Vorzugsweise liegt der Trockenmassengehalt der Frischkäsegrundmasse bei etwa 15 bis etwa 24 Gew.-% und insbesondere bei etwa 18 Gew.-%. Der Proteingehalt kann etwa 10 bis etwa 15 Gew.-% und vorzugsweise etwa 12 Gew.-% betragen.

### FRUCHTZUBEREITUNG

Die Natur der Fruchtzubereitungen ist im Sinne der Erfindung wenig kritisch und wird im Wesentlichen durch die geschmacklichen Vorgaben bestimmt. Es kann sich daher bei der Komponente (b) beispielsweise um Marmelade, Fruchtaufstrich, Konfitüre oder Fruchtgelee handeln.

Unter **Marmelade** ist die traditionelle Bezeichnung für einen Brotaufstrich zu verstehen, der aus mit Zucker eingekochten Früchten hergestellt wird, ohne dass Fruchtstücke im Fertigprodukt sichtbar bleiben.

Unter einer **Konfitüre** versteht man indes ein Produkt, in dem die Fruchtstückchen noch sichtbar sind.

**Fruchtgelees** enthalten Pektin, das in vielen Früchten, besonders in Äpfeln, enthalten ist. Um es aus den Zellwänden zu lösen, werden pektinreiche Früchte mit Zucker gekocht. Der Zucker entzieht den Zellen Wasser, wobei ihre Wände zerstört und das Pektin leichter freigesetzt werden kann. Ist genug Zucker in der Lösung vorhanden, bindet das freiwerdende Wasser an den Zucker - die Pektinmoleküle können nur noch miteinander reagieren und nicht mehr mit dem Wasser. Damit sie sich beim Abkühlen zu einem Gerüst verbinden, in dem das Wasser "eingesperrt" wird, müssen sie allerdings in genügend hoher Konzentration vorliegen und die Lösung muss sauer sein, da die Pektinmoleküle sich sonst (durch Ionisierung) gegenseitig abstoßen. Der ideale pH-Wert liegt bei 3,3. Lebensmittelrechtlich werden Gelees aus wässrigen Auszügen von Früchten oder eingedicktem Fruchtsaft als *Gelee einfach* (Obstsaftanteil von mindestens 35 %) oder *Gelee extra* (Obstsaftanteil von mindestens 45 %) bezeichnet.

### ZUBEREITUNGEN

Die erfindungsgemäßen Zubereitungen können die Komponenten (a) und (b) im Gewichtsverhältnis von 80:20 bis 50:50 und vorzugsweise von 70:30 bis 60:40 enthalten.

Neben den beiden Komponenten (a) und (b) können die Zubereitungen auch weitere für Milch- und Fruchtprodukte übliche Hilfs- und Zusatzstoffe enthalten, wozu insbesondere Verdickungs- und Säuerungsmittel sowie Säureregulatoren zählen.

In einer bevorzugten Ausführungsform können die erfindungsgemäßen Zubereitungen die Komponenten daher in folgenden Mengen enthalten:
(a) 20 bis 80 Gew.-%, vorzugsweise 50 bis 60 Gew.-% Frischkäse,
(b) 20 bis 50 Gew.-%, vorzugsweise 30 bis 40 Gew.-% Fruchtzubereitung,
(c) 0 bis 5 Gew.-%, vorzugsweise 1 bis 3 Gew.-% Verdickungsmittel,
(d) 0 bis 2 Gew.-%, vorzugsweise 0,5 bis 2 Gew.-% Säuerungsmittel und Säureregulatoren, sowie
(e) 0 bis 3 Gew.-%, vorzugsweise 1 bis 2 Gew.-% weitere Hilfs- und Zusatzstoffe mit der Maßgabe, dass sich die Mengenangaben zu 100 Gew.-% ergänzen.

### VERDICKUNGSMITTEL

Verdickungsmittel, die die fakultative Komponente (c) bilden, sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400: - Alginsäure
- E 401: - Natriumalginat
- E 402: - Kaliumalginat
- E 403: - Ammoniumalginat
- E 404: - Calciumalginat
- E 405: - Propylenglycolalginat
- E 406: - Agar Agar
- E 407: - Carrgeen, Furcelleran
- E 407: - Johannisbrotkernmehl
- E 412: - Guarkernmehl
- E 413: - Traganth
- E 414: - Gummi arabicum
- E 415: - Xanthan
- E 416: - Karaya (Indischer Traganth)
- E 417: - Tarakernmehl (Peruanisches Johannisbrotkernmehl)
- E 418: - Gellan
- E 440: - Pektin, Opekta
- E 440ii: - Amidiertes Pektin
- E 460: - Mikrokristalline Cellulose, Cellulosepulver
- E 461: - Methylcellulose
- E 462: - Ethylcellulose
- E 463: - Hydroxypropylcellulose
- E 465: - Methylethylcellulose
- E 466: - Carboxymethylcellulose, Natriumcarboxymethylcellulose

### SÄUERUNGSMITTEL

Die Nahrungsmittel können Säuerungsmittel und/oder Säureregulatoren enthalten. Säuren im Sinne der Erfindung sind bevorzugt in Lebensmitteln zulässige Säuren, insbesondere die hier genannten:
- E 260: - Essigsäure
- E 270: - Milchsäure
- E 290: - Kohlendioxid
- E 296: - Apfelsäure
- E 297: - Fumarsäure
- E 330: - Citronensäure
- E 331: - Natriumcitrat
- E 332: - Kaliumcitrat
- E 333: - Calciumcitrat
- E 334: - Weinsäure
- E 335: - Natriumtartrat
- E 336: - Kaliumtartrat
- E 337: - Natrium-Kaliumtartrat
- E 338: - Phosphorsäure
- E 353: - Metaweinsäure
- E 354: - Calciumtartrat
- E 355: - Adipinsäure
- E 363: - Bernsteinsäure
- E 380: - Triammoniumcitrat
- E 513: - Schwefelsäure
- E 574: - Gluconsäure
- E 575: - Glucono-delta-Lacton

### SÄUREREGULATOREN

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170: - Calciumcarbonat
- E 260-263: - Essigsäure und Acetate
- E 270: - Milchsäure
- E 296: - Äpfelsäure
- E 297: - Fumarsäure
- E 325-327: - Lactate (Milchsäure)
- E 330-333: - Citronensäure und Citrate
- E 334-337: - Weinsäure und Tartrate
- E 339-341: - Orthophosphate
- E 350-352: - Malate (Äpfelsäure)
- E 450-452: - Di-, Tri- und Polyphosphate
- E 500-504: - Carbonate (Kohlensäure)
- E 507: - Salzsäure und ChlorideE 513-517Schwefelsäure und Sulfate
- E 524-528: - Hydroxide
- E 529-530: - Oxide
- E 355-357: - Adipinsäure und Adipate
- E 574-578: - Gluconsäure und Gluconate

### WEITERE HILFS- UND ZUSATZSTOFFE

**Süßstoffe.** Zu den weiteren Hilfs- und Zusatzstoffen, die die Zubereitungen enthalten können, zählen beispielsweise Süßstoffe. Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch
synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).
Die bevorzugten Vitamine sind neben der Ascorbinsäure die Gruppe der Tocopherole.

**Prebiotische Stoffe.** In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind etwa Fructooligosaccharide, Inuline, Isomaltooligosaccharide, Lactilol, Lactosucrose, Lactulose, Pyrodextrine Sojaoligosaccharide, Transgalactooligosaccharide, Xylooligosaccharide und Beta-Glucane.

### HERSTELLVERFAHREN

### Schichtung

Bei der Schichtung wird entweder die Komponente (a) oder die Komponente (b) zuerst und anschließend die jeweils andere Komponente eingefüllt. Dieser Vorgang kann wiederholt werden.

### Strudeldosierung

Zur Erzeugung eines Strudelmusters kann die Abfüllung der Komponenten (a) und (b) auf zwei Weisen erfolgen, nämlich einmal dergestalt, dass man
(i) die beiden Komponenten (a) und (b) über separate feste Dosierungsvorrichtungen in einen Container abfüllt, der sich während des Vorgangs dreht oder zum anderen indem man
(ii) die beiden Komponenten (a) und (b) entweder über eine feste und eine sich drehende Dosierungsvorrichtung oder über zwei sich synchron drehende Dosierungsvorrichtungen in einen Container abfüllt, der sich während des Vorgangs fest steht.

### Strangdosierung

Bei der Strangdosierung erfolgt eine Extrusion durch koaxial angeordnete Düsen, d.h. Komponente (a) wird beispielsweise durch die zentrale, mittig angeordnete Düse dosiert, Komponente (b) durch um die Zentraldüse konzentrisch angeordnete Düsen, die in der Regel einen deutlich kleineren Querschnitt aufweisen.

### GEWERBLICHE ANWENDBARKEIT

Ein weiterer Gegenstand der vorliegenden Erfindung betrifft die Verwendung einer Zubereitung, enthaltend
(a) eine Frischkäsekomponente, die dadurch erhältlich ist, dass man
   (a1) Rohmilch einer Temperaturbehandlung unterwirft und den Rahm abtrennt, so dass eine ungesäuerte Quarkgrundmasse entsteht,
   (a2) die so erhaltene Mischung einer Temperaturbehandlung unterwirft, bis Denaturierung eintritt,
   (a3) das denaturierte Produkt mit Starterkulturen und Lab versetzt und gegebenenfalls
   (a4) die nach Abschluss der Fermentation erhaltene Quarkgrundmasse auf einen definierten Trockenmassen- und Proteingehalt einstellt,
   und als Starterkultur
   (i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
   (ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
   einsetzt,
   und
(b) eine Fruchtzubereitung,
wobei die Komponenten (a) und (b) in einem Behältnis dergestalt nebeneinander vorliegen, dass sie in den drei Raumrichtungen zusammenhängende Volumina einnehmen, die sich nicht vermischen, als Lebensmittel, speziell als Brotaufstrich.

### BEISPIELE

### BEISPIELE ZUR QUARKHERSTELLUNG

Die nachfolgenden Beispiele sollen den Vorteil aufzeigen, der mit der Verwendung spezieller Quarkmassen unter Einsatz ausgewählter Starterkulturen verbunden ist.

### Beispiele 1 bis 4, Vergleichsbeispiele V1 bis V5

4 kg Magermilch wurden 6 min bei 88 °C behandelt und die enthaltenen Proteine denaturiert. Die Masse wurde mit unterschiedlichen Milchsäurebakterien und Lab versetzt, bei 30 °C etwa 18 h gereift und anschließend aufgerührt. Anschließend wurde das Fermentationsprodukt in eine Zentrifuge gegeben und ca. 3,2 kg Sauermolke als flüssiger Bestandteil abgetrennt. Die zurückgebliebene Quarkmasse (ca. 800 g) wurde durch Zugabe von Sahne auf eine Trockenmasse von 18 Gew.-% und einen Proteingehalt von 12 Gew.-% eingestellt. Beispiel 4 unterscheidet sich von Beispiel 2 dadurch, dass die Grundmasse zusätzlich nach der Fermentation in einem Rotor-Stator-Mischer der Firma YTRON verrührt ("gestrecht") wurde. Anschließend wurden die Produkte von einem Panel bestehend aus 5 erfahrenen Testern geschmacklich und sensorisch auf einer Skala von 1 (= trifft nicht zu) bis 6 (= trifft voll zu) beurteilt. Die Ergebnisse sind in **Tabelle 1** zusammengefasst. Die Beispiele 1 bis 4 sind erfindungsgemäß, die Beispiele V1 bis V5 dienen zum Vergleich. Angegeben sind die Mittelwerte der Beurteilungen.

**Tabelle 1**

| Geschmackliche und sensorische Beurteilung der Quarkgrundmassen | | | | | |
|---|---|---|---|---|---|
| **Bsp.** | **Starterkultur** | **Geschmack** | **Sensorik** | | |
| | | **Bitter** | **Cremig** | **Glatt** | **Schleimig** |
| V1 | *Bifido bakterium lactis B12* | 5,5 | 3,0 | 2,0 | 5,5 |
| V2 | *Lactobazillus acidophilus* | 5,0 | 3,5 | 2,0 | 5,5 |
| V3 | *Bifido bakterium lactis B12* + *Lactobazillus acidophilus (1:1)* | 5,0 | 3,0 | 2,0 | 5,5 |
| V4 | Mischung (i) | 3,0 | 2,5 | 2,0 | 4,0 |
| V5 | Mischung (i) | 4,0 | 2,0 | 2,0 | 4,0 |
| 1 | Mischung (i+ii) = 75:25 | 2,0 | 4,0 | 3,5 | 2,0 |
| 2 | Mischung (i+ii) = 50:50 | 1,5 | 4,5 | 4,0 | 1,0 |
| 3 | Mischung (i+ii) = 25:75 | 2,5 | 4,0 | 3,5 | 1,5 |
| 4 | Mischung (i+ii) = 50:50 | 1,0 | 5,5 | 4,5 | 1,0 |

Die Versuche und Vergleichsversuche zeigen deutlich, dass die Auswahl der Starterkulturen einen erheblichen Einfluss auf die geschmacklichen und sensorischen Eigenschaften der Quarkgrundmasse hat. Die Quarkgrundmasse mit den besten Eigenschaften, d.h. der geringsten Bitterkeit, der höchsten Cremigkeit, die zudem keinen schleimigen Eindruck hinterlässt wurde mit einer erfindungsgemäßen Kombination der Kulturmischungen (i) und (ii) erhalten. Durch Behandlung im Ytron-Mischer wurden die sensorischen Werte nochmals verbessert.

### Beispiele 5 bis 7, Vergleichsbeispiele V6 bis V10

Die nachfolgenden Beispiele zeigen den Einfluss, den der gezielte Eintrag von Rührenergie in die fermentierten Quarkgrundmasse auf deren physikochemisches Verhalten hat. Beurteilt wurde, wie sich die Behandlung auf die Neigung der Quarkgrundmasse auswirkt, beim Zusatz von Fruchtzubereitungen Wasser aufzunehmen und so im Geschmack zu verwässern. Dazu wurden erfindungsgemäße Quarkgrundmassen, die auf der Basis von unterschiedlichen Starterkulturen hergestellt worden waren, einmal vor und einmal nach der Behandlung mit einem Rotor-Stator-Mischer der Firma YTRON (20°C, 15 min, 2.500 Upm) mit jeweils 25 Gew.-% einer Marmelade aus Erdbeeren und Ananas überschichtet und sowohl der optische als auch der geschmackliche Eindruck nach Lagerung der Zubereitungen über einen Zeitraum von 5 Stunden bei 7 °C durch ein Panel aus 5 erfahrenen Testern beurteilt.

Die optische Beurteilung erfolgte an Hand einer Skala von (1) = klare Trennung zwischen Quarkmasse und Fruchtzubereitung und (4) = Quarkmasse und Fruchtzubereitung vermischt; die geschmackliche Beurteilung erfolgte analog auf einer Skala von (1) = prägnanter Fruchtgeschmack bis (4) = Geschmack wässrig. Die Ergebnisse sind in der nachfolgenden **Tabelle 2** zusammengefasst. Die Beispiele 5 bis 7 sind erfindungsgemäß, die Beispiele V6 bis V10 dienen zum Vergleich.

**Tabelle 2**

| Beurteilung der Quarkgrundmassen ohne bzw. mit Nachbehandlung mit einem Rotor-Stator-Mischer | | | | | |
|---|---|---|---|---|---|
| **Bsp.** | **Starterkultur** | **Optischer Eindruck** | | **Geschmacklicher Eindruck** | |
| | | **ohne** | **mit** | **ohne** | **mit** |
| V6 | *Bifido bakterium lactis B12* | 3,5 | 3,0 | 3,0 | 2,5 |
| V7 | *Lactobazillus acidophilus* | 3,5 | 3,0 | 3,0 | 3,0 |
| V8 | *Bifido bakterium lactis B12* + *Lactobazillus acidophilus (1:1)* | 3,5 | 3,0 | 3,0 | 2,5 |
| V9 | Mischung (i) | 3,0 | 3,0 | 3,0 | 2,5 |
| V10 | Mischung (i) | 3,0 | 2,5 | 3,0 | 2,5 |
| 5 | Mischung (i+ii) = 75:25 | 2,0 | 1,0 | 2,0 | 1,0 |
| 6 | Mischung (i+ii) = 50:50 | 1,5 | 1,0 | 1,5 | 1,0 |
| 7 | Mischung (i+ii) = 25:75 | 2,0 | 1,0 | 2,0 | 1,0 |

Die Beispiele und Vergleichsbeispiele zeigen, dass durch die Nachbehandlung im Rotor-Stator-Mischer sowohl der optische als auch der geschmackliche Eindruck noch einmal durchgehend verbessert wird. Dabei führt der Einsatz der ausgewählten Kulturmischungen gegenüber dem Standardprodukt Bifidobakterium wiederum zu einem deutlich besseren Endprodukt.

### BEISPIELE ZU HERSTELLUNG DER ENDPRODUKTE

### BEISPIELE H1 bis H6

Es wurden Zubereitungen gemäß **Tabelle 3** hergestellt. Die Mischungen 1 bis 4 wurden durch einen ersten statischen Doseur für Komponente (a) und einen zweiten statischen Doseur für Komponente (b) in eine mit einer Geschwindigkeit von 30 Upm rotierende Vorlage abgefüllt. Die Mischungen 5 und 6 wurden über koaxiale Düsen in die Vorlage extrudiert, nämlich Komponente (a) durch eine Düse mit einem Durchmesser von 0,5 cm und Komponente (b) durch 5 konzentrisch um die Hauptdüse angeordnete Düsen mit einem Durchmesser von 0,3 cm.

**Tabelle 3**

| Zusammensetzung der konfektionierten Produkte | | | | | | | |
|---|---|---|---|---|---|---|---|
| **Komp.** | **Bestandteil** | **H1** | **H2** | **H3** | **H4** | **H5** | **H6** |
| A | Speisequark 15 % F.i.Tr* | 50 | 60 | 65 | 70 | 75 | 80 |
| B | Erdbeermarmelade | 50 | - | - | - | 25 | - |
| | Kirschmarmelade | - | 40 | - | - | - | 20 |
| | Brombeermarmelade | - | - | 35 | - | - | - |
| | Johannisbeergelee | - | - | - | 30 | - | - |
| | Pektin | - | - | - | - | - | 0,2 |
| | Zitronensäure | 0,1 | 0,1 | 0,1 | 0,1 | 0,1 | 0,1 |

| | | | | | | | |
|---|---|---|---|---|---|---|---|
| * Fett in Trockenmasse; nach Mischung 1 aus Tabelle 1 | | | | | | | |

## Patentansprüche

1. Streichfähige Lebensmittelzubereitung, enthaltend
(a) eine Frischkäsekomponente, die dadurch erhältlich ist, dass man
(a1) Rohmilch einer Temperaturbehandlung unterwirft und den Rahm abtrennt, so dass eine ungesäuerte Quarkgrundmasse entsteht,
(a2) die so erhaltene Mischung einer Temperaturbehandlung unterwirft, bis Denaturierung eintritt,
(a3) das denaturierte Produkt mit Starterkulturen und Lab versetzt und gegebenenfalls
(a4) die nach Abschluss der Fermentation erhaltene Quarkgrundmasse auf einen definierten Trockenmassen- und Proteingehalt einstellt,
und als Starterkultur
(i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
einsetzt,
und
(b) eine Fruchtzubereitung,
wobei die Komponenten (a) und (b) in einem Container dergestalt nebeneinander vorliegen, dass sie in den drei Raumrichtungen zusammenhängende Volumina einnehmen, die sich nicht vermischen.

2. Zubereitung nach Anspruch 1, **dadurch gekennzeichnet, dass** die Komponenten (a) und (b) geschichtet vorliegen.

3. Zubereitung nach Anspruch 1, **dadurch gekennzeichnet, dass** die Komponenten (a) und (b) im Container ein Strudelmuster bilden.

4. Zubereitung nach Anspruch 1, **dadurch gekennzeichnet, dass** die Komponenten (a) und (b) im Container als jeweils separate Stränge vorliegen.

5. Zubereitung nach mindestens einem der Ansprüche 1 bis 4, **dadurch gekennzeichnet, dass** sie als Komponente (a) Speisequark enthalten.

6. Zubereitung nach mindestens einem der Ansprüche 1 bis 5, **dadurch gekennzeichnet, dass** sie als Komponente (b) Marmelade, Fruchtaufstrich, Konfitüre oder Fruchtgelee enthalten.

7. Zubereitung nach mindestens einem der Ansprüche 1 bis 6, **dadurch gekennzeichnet, dass** sie die Komponenten (a) und (b) im Gewichtsverhältnis von 80:20 bis 50:50 enthalten.

8. Zubereitung nach mindestens einem der Ansprüche 1 bis 7, **dadurch gekennzeichnet, dass** sie weiterhin Verdickungsmittel enthält.

9. Zubereitung nach mindestens einem der Ansprüche 1 bis 8, **dadurch gekennzeichnet, dass** sie weiterhin Säuerungsmittel und/oder Säureregulatoren enthält.

10. Zubereitung nach mindestens einem der Ansprüche 1 bis 9, **dadurch gekennzeichnet, dass** sie
(a) 20 bis 80 Gew.-% Frischkäse,
(b) 20 bis 50 Gew.-% Fruchtzubereitung,
(c) 0 bis 5 Gew.-% Verdickungsmittel,
(d) 0 bis 2 Gew.-% Säuerungsmittel und
(e) 0 bis etwa 3 Gew.-% weitere Hilfs- und Zusatzstoffe
mit der Maßgabe enthalten, dass sich die Mengenangaben zu 100 Gew.-% ergänzen.

11. Verfahren zur Herstellung einer streichfähigen Lebensmittelzubereitung nach mindestens einem der Ansprüche 1 bis 10, **dadurch gekennzeichnet, dass** man
(i) die beiden Komponenten (a) und (b) über separate feste Dosierungsvorrichtungen in einen Container abfüllt, der sich während des Vorgangs dreht oder zum anderen indem man
(ii) die beiden Komponenten (a) und (b) entweder über eine feste und eine sich drehende Dosierungsvorrichtung oder über zwei sich synchron drehende Dosierungsvorrichtungen in einen Container abfüllt, der während des Vorgangs fest steht.

12. Verfahren zur Herstellung einer streichfähigen Lebensmittelzubereitung nach mindestens einem der Ansprüche 1 bis 10, **dadurch gekennzeichnet, dass** man durch die eine Komponente über eine zentrale, mittig angeordnete Düse und die andere Komponente durch um die Zentraldüse konzentrisch angeordnete Düsen in einen Container extrudiert.

13. Verwendung einer Zubereitung nach mindestens einem der Ansprüche 1 bis 10 als Lebensmittel.

14. Verwendung nach Anspruch 13, **dadurch gekennzeichnet, dass** die Zubereitung als Brotaufstrich eingesetzt wird.

## Claims

1. A spreadable foodstuffs preparation comprising
(a) a fresh cheese component obtained by a process comprising the following steps:
(a1) subjecting the raw milk to heat treatment and removing the cream to obtain an un-acidified quark base mix,
(a2) subjecting the thus obtained mixture to heat treatment until onset of denaturation,
(a3) admixing the denatured product with starter cultures and rennet and optionally
(a4) adjusting the quark base mix obtained after completion of fermentation to a defined dry matter content and protein content,
where the starter cultures employed are
(i) a first mixture of five microorganism strains comprising (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* and (i-5) *Lactococcus lactis subsp. Cremoris,* and
(ii) a second mixture of three microorganism strains comprising (ii-1) *Streptococcus thermophilus,* (ii-2) *Lactococcus lactis subsp. lactis* and (ii-3) *Lactococcus lactis subsp. Cremoris,*
and
(b) a fruit preparation, wherein the components (a) and (b) are present side by side in a container such that they occupy three-dimensionally continuous volumes that do not mix.

2. The preparation according to claim 1, wherein the components (a) and (b) are layered

3. The preparation according to claim 1, wherein the components (a) and (b) form a swirl pattern in the container.

4. The preparation according to claim 1, wherein the components (a) and (b) are present in the container as respective separate strands.

5. The preparation according to at least one of claims 1 to 4, comprising regular quark as component (a).

6. The preparation according to at least one of claims 1 to 5, comprising jam, fruit spread, confiture or fruit jelly as component (b).

7. The preparation according to at least one of claims 1 to 6, comprising components (a) and (b) in a weight ratio of 80:20 to 50:50.

8. The preparation according to at least one of claims 1 to 7, further comprising thickeners.

9. The preparation according to at least one of claims 1 to 8, further comprising acidulants and/or acidity regulators.

10. The preparation according to at least one of claims 1 to 9, comprising
(a) 20 to 80 wt % of fresh cheese,
(b) 20 to 50 wt % of fruit preparation,
(c) 0 to 5 wt % of thickeners,
(d) 0 to 2 wt % of acidulants and
(e) 0 to about 3 wt % of further auxiliary/added substances,
with the proviso that the specified amounts sum to 100 wt %.

11. A process for producing a spreadable foodstuffs preparation according to at least one of claims 1 to 10, comprising
(i) filling the two components (a) and (b) via separate fixed dispensing apparatuses into a container which rotates during the procedure, or
(ii) filling the two components (a) and (b) either via a fixed dispensing apparatus and a rotating dispensing apparatus or via two synchronously rotating dispensing apparatuses into a container which remains fixed during the procedure.

12. A process for producing a spreadable foodstuffs preparation according to at least one of claims 1 to 10, comprising extruding one component via a central, medially arranged nozzle and the other component through nozzles arranged concentrically around the central nozzle, into a container.

13. Use of a preparation according to at least one of claims 1 to 10 as a foodstuff.

14. Use according to claim 13, wherein the preparation is used as a spread.

## Revendications

1. Préparation alimentaire tartinable, contenant:
(a) un composant fromage frais, qui peut être obtenu en ce que
(a1) du lait cru est soumis à un traitement thermique et la crème est séparée, de manière à former une masse de base de caillebotte non acidifiée,
(a2) le mélange ainsi obtenu est soumis à un traitement thermique jusqu'à ce qu'une dénaturation se produise,
(a3) le produit dénaturé est mélangé avec des cultures de départ et de la présure, et éventuellement
(a4) la masse de base de caillebotte obtenue après la fin de la fermentation est ajustée à une teneur en matière sèche et en protéines définie,
et en tant que culture de départ,
(i) un premier mélange de cinq souches de microorganismes comprenant (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* et (i-5) *Lactococcus lactis subsp. cremoris,* et
(ii) un deuxième mélange de trois souches de microorganismes comprenant (ii-1) *Streptococcus thermophilus,* (ii-2) *Lactococcus lactis subsp. lactis* et (ii-3) *Lactococcus lactis subsp. cremoris,*
sont utilisés,
et
(b) une préparation à base de fruits,
les composants (a) et (b) se présentant dans un contenant l'un à côté de l'autre de sorte qu'ils occupent des volumes connexes dans les trois directions de l'espace, qui ne se mélangent pas.

2. Préparation selon la revendication 1, **caractérisée en ce que** les composants (a) et (b) se présentent sous forme stratifiée.

3. Préparation selon la revendication 1, **caractérisée en ce que** les composants (a) et (b) forment dans le contenant un motif de tourbillon.

4. Préparation selon la revendication 1, **caractérisée en ce que** les composants (a) et (b) se présentent dans le contenant sous la forme de cordons séparés.

5. Préparation selon au moins l'une quelconque des revendications 1 à 4, **caractérisée en ce qu'**elle contient en tant que composant (a) du fromage blanc.

6. Préparation selon au moins l'une quelconque des revendications 1 à 5, **caractérisée en ce qu'**elle contient en tant que composant (b) de la marmelade, de la pâte de fruit, de la confiture ou de la gelée de fruit.

7. Préparation selon au moins l'une quelconque des revendications 1 à 6, **caractérisée en ce qu'**elle contient les composants (a) et (b) en un rapport en poids de 80:20 à 50:50.

8. Préparation selon au moins l'une quelconque des revendications 1 à 7, **caractérisée en ce qu'**elle contient en outre des épaississants.

9. Préparation selon au moins l'une quelconque des revendications 1 à 8, **caractérisée en ce qu'**elle contient en outre des acidifiants et/ou des régulateurs d'acidité.

10. Préparation selon au moins l'une quelconque des revendications 1 à 9, **caractérisée en ce qu'**elle contient :
(a) 20 à 80 % en poids de fromage frais,
(b) 20 à 50 % en poids de préparation à base de fruits,
(c) 0 à 5 % en poids d'épaississants,
(d) 0 à 2 % en poids d'acidifiants et
(e) 0 à environ 3 % en poids d'autres adjuvants et additifs,
à condition que la somme des données de quantité soit de 100 % en poids.

11. Procédé de fabrication d'une préparation alimentaire tartinable selon au moins l'une quelconque des revendications 1 à 10, **caractérisé en ce que**
(i) les deux composants (a) et (b) sont placés par des dispositifs d'alimentation fixes séparés dans un contenant, qui est mis en rotation pendant le processus, ou
(ii) les deux composants (a) et (b) sont placés soit par un dispositif d'alimentation fixe et un dispositif d'alimentation rotatif, soit par deux dispositifs d'alimentation rotatifs de manière synchrone dans un contenant, qui est fixe pendant le processus.

12. Procédé de fabrication d'une préparation alimentaire tartinable selon au moins l'une quelconque des revendications 1 à 10, **caractérisé en ce qu'**un composant est extrudé par une buse centrale agencée au milieu et l'autre composant par des buses agencées concentriquement autour de la buse centrale dans un contenant.

13. Utilisation d'une préparation selon au moins l'une quelconque des revendications 1 à 10 en tant que produit alimentaire.

14. Utilisation selon la revendication 13, **caractérisée en ce que** la préparation est utilisée en tant que pâte à tartiner.
